# EUROPÄISCHE PATENTSCHRIFT

(11) **EP 0 814 668 B1**
(45) Veröffentlichungstag und Bekanntmachung des Hinweises auf die Patenterteilung: **26.09.2001**
(21) Anmeldenummer: 96908126.4
(22) Anmeldetag: 23.03.1996
(51) Int. Cl.: A23C 9/20, A23C 9/127, A23L 1/305

(54) **VERFAHREN ZUR HERSTELLUNG VON FRÜHGEBORENEN-, SÄUGLINGS- UND DIÄTNAHRUNGEN**
PROCESS FOR PRODUCING FOODS FOR PREMATURE BABIES AND INFANTS AND DIETETIC FOODS
PROCEDE DE PRODUCTION DE PREPARATIONS ALIMENTAIRES POUR PREMATURES, NOURRISSONS ET D'ALIMENTS DIETETIQUES

(30) Priorität: 24.03.1995 DE 19510765
(43) Veröffentlichungstag der Anmeldung: 07.01.1998
(60) Teilanmeldung: 01107336.8
(73) Patentinhaber: Bühlbäcker, Alexander, 50374 Erftstadt (DE)
(72) Erfinder: Bühlbäcker, Alexander, 50374 Erftstadt (DE)
(74) Vertreter: Jönsson, Hans-Peter, Dr.Dipl.-Chem.
(86) Internationale Anmeldenummer: EP9601288
(87) Internationale Veröffentlichungsnummer: WO9629881

(56) Entgegenhaltungen:
- EP-A- 0 307 559
- EP-A- 0 443 763
- WO-A-91/08675
- FR-A- 707 345
- FR-A- 913 241
- US-A- 4 954 361
- US-A- 5 013 569
- US-A- 5 169 666

## Beschreibung

Die Erfindung betrifft Diätnahrungen für, Säuglinge und Frühgeborene sowie Verfahren zur ihrer Herstellung auf der Basis von Milch-, Milchbestandteilen und Milchprodukten von Equiden.

Für Säuglinge gilt als Referenznahrung die Frauenmilch; auch hat die EU Richtlinien für die Herstellung von Säuglingsanfangs- und -Folgenahrungen erstellt (EG Amtsblatt L 175, 1991); für die Ernährung von Frühgeborenen und Kleinkindern haben verschiedene Ernährungsgesellschaften Vorschläge erarbeitet. In Europa gelten die Ausarbeitungen der ESPGAN (European Society of Pediatric Gastroenterology and Nutrition), in den USA die der AAP (American Academy of Pediatrics) als maßgeblich.

Mit unveränderter Kuhmilch, unveränderter Soja-"Milch" sowie den anderen genannten Proteinquellen lassen sich die vorgeschriebenen Referenzen nicht erreichen. Aus diesem Grund werden aufwendige milchtechnologische Verfahren eingesetzt, um zu Nahrungszusammensetzungen zu gelangen, die den vorgegebenen Richtlinien möglichst nahe kommen. Durch diese tief in die natürliche Milchstruktur eingreifenden Verfahren entstehen einige physiologische Probleme.

Zum Beispiel sind die Resorptionsquoten der Inhaltsstoffe bei künstlichen Nahrungsgemischen im allgemeinen deutlich geringer als bei natürlichen Nahrungskompositionen, wie unbehandelter Milch. Ein eklatantes Beispiel dafür ist die Eisenresorption bei Säuglingen. Bei reiner Frauenmilchernährung beträgt die Resorptionsquote zwischen 70 % und 90 %. Bei Formulanahrungen auf Kuhmilchbasis liegt sie zwischen 4 % und 7 %. Um eine adäquate Eisenversorgung zu gewährleisten, enthält Frauenmilch durchschnittlich etwa 50 µg Eisen pro 100 ml, während Säuglingsformeln zum Teil mit über 1000 µg Eisen pro 100 ml Nahrung substituiert werden müssen. Diese Verhältnisse gelten in analoger und abgeschwächter Form für fast alle Nährstoffe.

Ein weiteres Problem ergibt sich durch das Herausreißen von Nahrungsbestandteilen aus ihren natürlichen Zusammenhängen und dem späteren Resubstituieren. So wurden in den letzten Jahren mehrfach Fälle von hypochlorämischer Alkalose durch alimentären Chloridmangel bei Säuglingen in der Fachpresse veröffentlicht. Meistens handelt es sich um Probleme der technischen Sicherheit bei der Herstellung entsprechender Säuglingsformeln.

Natürliche Nahrungsgrundlagen enthalten neben den bekannten und in ihrer physiologischen Bedeutung erforschten Substanzen häufig noch eine Vielzahl von Inhaltsstoffen, die überhaupt oder in ihrer Bedeutung für den Organismus nicht bekannt, aber trotzdem von essentiellem Charakter sind. In einem natürlichen Substanzgemisch sind diese Stoffe häufig enthalten, in künstlichen oder durch technologische Prozesse denaturierten Produkten müssen sie jedoch in der Regel gezielt zugesetzt werden, was aber erst geschehen kann, wenn man Kenntnis von den jeweiligen Substanzen, ihrer physiologischen Bedeutung und dem Bedarf hat. Beispiele dafür aus jüngerer Zeit aus dem Sektor der Säuglings- und Frühgeborenenernährung sind die Diskussionen um die nichtproteinogene Aminosäure Taurin und das Carnitin. Carnitin und Taurin sind zum Beispiel in Nahrungen mit der Proteinquelle Soja nicht ausreichend vorhanden. Erst durch Zeichen einer Mangelversorgung (zum Beispiel muskuläre Hypotonien bei Säuglingen unter nicht Carnitin-substituierten Säuglingsnahrungen auf Sojabasis) wurde man auf die Mängel aufmerksam. Hierhin gehört auch, dass bei der Demineralisierung der Kuhmilch alle Spurenelemente verloren gehen, während bei der Remineralisierung nur die wichtigsten Spurenelemente beziehungsweise diejenigen, die in ihrer physiologischen Bedeutung bekannt sind, wieder zugesetzt werden.

Insgesamt gesehen stellt also eine Frühgeborenen-, Säuglings- oder Kleinkindnahrung auf Kuhmilchbasis eine Nahrung dar, von der auf der einen Seite große Quantitäten gegeben werden müssen, um die physiologischen Bedürfnisse der Zielgruppe zu erfüllen, auf der anderen Seite ist aufgrund der technologischen Eingriffe eine Mangelernährung in bezug auf verschiedene Substanzen dennoch nicht sicher auszuschließen. Mit diesen Eigenschaften steht eine Formelnahrung im deutlichen Gegensatz zur natürlichen Nahrung Frauenmilch. Frauenmilch ernährt den Säugling nach allen bisherigen Erkenntnissen in adäquater Weise mit minimalen stofflichen Quantitäten. Sie belastet also den Säugling, der einerseits noch in der Entwicklung befindliche Verdauungsorgane besitzt, auf der anderen Seite so schnell wächst wie im späteren Leben niemals mehr, nur mit einer geringen Verdauungstätigkeit und führt ihm dennoch alle Stoffe zu, die zu einem raschen und gesunden Wachstum erforderlich sind. Außerdem enthält Frauenmilch einige Substanzen (zum Beispiel: Lysozym, Lactoferrin, sekretorisches Immunglobulin A), die gerade in der für die allergene Prägung vulnerablen Phase einen Schutz und eine Förderung der ordnungsgemässen Entwicklung des Darmes und auch des Immunsystems darstellen. Säuglingsformeln hingegen belasten den noch schwachen Säuglingsorganismus mit einer großen Substanzmenge, bieten darüber hinaus unter Umständen die Gefahr einer Mangelernährung; Schutz und Förderung der Entwicklung des Darmsystems und des Immunsystems entfallen völlig.

Die Anpassung von Nahrungsmitteln an bestimmte diätetische Bedürfnisse durch lebensmitteltechnologische Prozesse und den Zusatz diverser Substanzen ist an sich seit Jahren Stand der Technik (zum Beispiel bei der Ergänzung von milchtechnologisch vorbehandelten Proteinfraktionen zu einer vollständigen Säuglingsnahrung). Um eine solche Anpassung gemäß den heutigen Standards (siehe zum Beispiel EG Amtsblatt L 175, 1991) vornehmen zu können, ist jedoch eine detaillierte Kenntnis der Zusammensetzung der gewählten Ausgangssubstanz(en) erforderlich. Diese ist zum Beispiel für Kuhmilch und Soja"Milch" allgemein zugänglich, jedoch nicht für Equidenmilch.

Versuche zur Anpassung von Esel- und Pferdestutenmilch an die physiologischen Bedürfnisse von Säuglingen und Frühgeborenen wurden schon mehrfach durchgeführt (Klemm R.: Über Eselsmilch und Säuglingsmilchernährung, Jahrbuch für Kinderheilkunde, 43, S. 369 ff., 1896, besonders S. 384; Wiesener H.: Untersuchungen zur Verwendung von Stutenmilch in der Säuglingsernährung, Berliner Medizin, 14, S. 589, 1963; Wiesener H. : Unersuchungen zum Vitamin C-Bedarf junger Säuglinge, Medizin und Ernährung, 7, S.120, 1964; Wiesener H. et. al.: Untersuchungen zur Wertigkeit der künstlichen Säuglingsernährung, Sonderdruck: Städtische Kinderklinik Charlottenburg, Berlin, 1964; Freudenberg E.: Über Säuglingsernährung mit Stutenmilch, Annales paediatrici, 166, S.338, 1946, I; Annales paediatrici, 171, S.49, 1948, II; Die Nahrung, 1975, S. 129 bis 142; Kalliala H. et.al.: On the use of mare's milk in infant feeding, Acta Paedriatr., 40, S. 94, 1951). Allen Versuchen ist zu eigen, dass es sich um den probeweisen Einsatz von Equidenmilch zur Ernährung von Säuglingen und Frühgeborenen, teilweise unter klinischen Bedingungen, handelt, um die Eignung von Equidenmilch für solche Zwecke zu testen. Equidenmilch wurde zu diesen Zwecken nach dem damaligen jeweiligen Kenntnisstand grob an die Frauenmilch angepasst. Dazu wurde eine Anreicherung mit Zuckern und/oder Kohlenhydraten sowie mit Fetten vorgenommen. Aus dieser Art und Handhabung geht hervor, dass es sich in den genannten Fällen um eine mehr experimentelle, sich vor allem an klinischen Gesichtspunkten und nicht an einer genauen Kenntnis der Inhaltsstoffe der Equidenmilch orientierenden Substitutionsweise handelt. Diese würde in wesentlichen Punkten die heute zum Teil gesetzlich geforderten Ansprüche an eine Säuglings- oder Frühgeborenennahrung nicht erfüllen.

FR-A-913 241 aus dem Jahre 1946 beschreibt eine maternisierte Milch und Verfahren zu ihrer Herstellung.

Es handelt sich hier also um eine einfache, nicht dem Stand der Technik am Anmeldetag entsprechende Adaption von Eselsmilch an die Erfordernisse der Säuglingsernährung unter Verwendung von Kuhmilchfett, Lactose und gegebenenfalls Saccharose. Die zerstörende Wirkung hitzeintensiver Trocknungsverfahren auf ernährungsphysiologisch wichtige Inhaltsstoffe der Eselsmilch findet keine Berücksichtigung.

FR-A-707 345 aus dem Jahre 1931 beschreibt ein Verfahren zur Herstellung von Säuglingsnahrung. Gemäß Anspruch 1 wird die Nahrung aus Tiermilch und ihren Produkten hergestellt durch Anreicherung mit Albumin, Zucke (Saccharose), organischen und anorganischen Salzen, Fett, sowie Wasser oder seinen Produkten.

Albumin wird jedoch nur in Casein-dominierten Säugetiermilchen zur Herstellung von Säuglingsnahrung zugesetzt werden, um das Verhältnis Casein/Molkenprotein und das Verhältnis Albumin/Globulin dem der Frauenmilch anzugleichen. Daraus ist ersichtlich, dass die Lehre zur Anpassung von Casein-dominierter Tiermilch an Frauenmilch gedacht ist. Albumin-dominierte Tiermilchen oder solche mit einem ausgeglichenen Verhältnis von Casein/Molkenprotein (zum Beispiel Equidenmilch) benötigen einen solchen Zusatz verständlicherweise nicht (siehe zum Beispiel FR-A-913 241). Die nachfolgenden Ansprüche, wie auch die Beschreibung der FR-A-707 345 handeln dann auch ausschließlich die Anpassung von Kuhmilch.

Im US-Patent 5169 666 wird gezeigt, dass Kuhmilchprotein im wesentlichen durch physikalische Manipulationen an der Proteinstruktur in einem bestimmten Grad an Frauenmilchprotein angepasst wird.

In WO 91/08675 wird ein Verfahren beschrieben, bei dem nach genetischer Manipulation durch den Mikroorganismus Escherischia coli alpha-Lactalbumin und beta-Casein hergestellt werden, welche die gleiche Aminosäurenzusammensetzung und - Funktion wie humanes Alpha-Lactalbumin und beta-Casein haben soll.

Bei dem US-Patent 4 954 361 wird ein Verfahren beschrieben, bei dem Kuhmilch durch Ultrafiltration von sämtlichen Eiweiß- und Fettbestandteilen befreit wird. Das so gewonnene Permeat wird mit nichttierischen Proteinbestandteilen (aus Kartoffel- und Soja-Isolat) sowie einem hypoallergenen Fett supplementiert und homogenisiert.

Die EP 0 443 763 A2 beschreibt ein Verfahren, bei dem Kuhmilchmolke ultrafiltriert wird, und aus dem Ultrafiltrat durch verschiedene weitere milchtechnologische Eingriffe die Non-Protein-Nitrogen-(NPN)Komponente konzentriert wird.

In einem zweiten Schritt wird das so gewonnene NPN-reiche Proteinkonzentrat in einem lonenaustauscher von größeren Anteilen des beta-Lactoglobulins befreit. In einem weiteren Präzipitationsverfahren wird der alpha-s-Caseingehalt des Kuhmilchcaseins reduziert.

US-A-5,013,569 beschreibt Säuglingsformeln, die besonders für Früh-, aber auch für Reifgeborene geeignet sind und ein Verfahren zu ihrer Herstellung. Das Patent bezieht sich auf eine optimiere Anpassung des Gehaltes der omega-3- und omega-6-Fettsäuren in Frühgeborenen- und Säuglingsformeln an die Verhältnisse in Frauenmilch. Zu diesem Zweck werden DHA und EPA in den Verhältnissen 1:1 bis 2:1 oder 3:2 in mikrogekapselter Form in den Fettkörper von Säuglingsformeln eingearbeitet. Weiterhin wird der Immunglobulingehalt in Frühgeborenen- und Säuglingsformeln optimiert. Zu diesem Zweck werden Immunglobuline in mikrogekapselter Form zugegeben, die im wesentlichen dem Gehalt von Immunglobulinen in Frauenmilch entsprechen. Ansonsten werden die Nahrungen in an sich bekannter Weise hergestellt.

Die EP 0 307 559 A beschreibt ein Verfahren zur Herstellung bifidogener Säuglings- und Diätnahrung mit verminderter Antigenität. Verfahren und Produkte aus der genannten Patentanmeldung unterscheiden sich deutlich von der vorliegenden Erfindung. Trotzdem können einige Produkte beider Erfindungen die gleiche Konsumentenzielgruppe ansprechen.

Zusammenfassend kann man sagen, dass alle bisher erwähnten Probleme bei der Fertigung von Frühgeborenen- und Säuglings- und Diätnahrungen auf folgenden Umständen beruhen: Zur Herstellung der Spezialnahrungen werden Substanzen oder Lebensmittel verwendet, die in großen Mengen und zu finanziell günstigen Konditionen auf dem Markt erhältlich sind. Diese Ausgangssubstanzen weisen jedoch in der Regel in ihrer Zusammensetzung erhebliche Abweichungen gegenüber der notwendigen biochemischen Zusammensetzungen der jeweils zu produzierenden Diätnahrung auf. Um diese Anpassung zu erreichen, müssen aufwendige lebensmitteltechnologische Prozesse angewendet werden. Des weiteren ist man darauf angewiesen, in größerem Umfang chemisch definierte, isolierte und nicht selten synthetisch hergestellte Zusatzstoffe zuzufügen. Man erhält auf diese Weise als Endprodukt ein weitgehend artifizielles Nährstoffgemisch, das rein substanziell betrachtet, den physiologischen Bedürfnissen der jeweiligen Zielgruppe (zum Beispiel Frühgeborene, Säuglinge, stoffwechselkranke Patienten) soweit angepasst ist, wie es der derzeitige technische Standard unter Berücksichtigung ökonomischer Kriterien erlaubt. Wie neuere Erkenntnisse der Resorptionsforschung zeigen, ist für die optimale physiologische Anpassung jedoch nicht nur eine Anpassung nach chemisch analytischen Kriterien von Bedeutung, sondern auch die Anordnung und Verbindung der einzelnen Substanzen untereinander (zum Beispiel Mineralien- und Spurenelementeinlagerungen in Caseinmizellen der Säugetiermilchen, also biophysikalische Phänomene). Aus der bisherigen relativ starken Fixierung auf chemisch analytische Kriterien und den großzügigen Einsatz lebensmitteltechnologischer Prozesse sind dann die erwähnten Probleme bei der Herstellung von Frühgeborenen-, Säuglings- und Diätnahrungen entstanden.

Das Problem der vorliegenden Erfindung ist es, die bisher geschilderten Probleme zu lösen.

Eine Ausführungsform der Erfindung besteht in Frühgeborenen- und Säuglings nahrungen mit den Merkmalen des Anspruchs 1. Weitere Ausführungsformen sind dem Verfahrensanspruch und den jeweiligen Unteransprüchen zu entnehmen.

Zur Vereinfachung der Darstellung steht im folgenden der Begriff "Milch" stellvertretend für die Begriffe "Milch", "Milchbestandteile" und "Milchprodukte".

Zur Vereinfachung der Darstellung steht im folgenden Begriff "Diätnahrung" stellvertretend für Frühgeborenen- und Säuglingsnahrung.

Als Equidenmilch ist im folgenden vorzugsweise, jedoch nicht ausschließlich, die Milch von Pferdestuten zu verstehen.

Die von Freudenberg, Kalliala, Wiesener (loc.cit.) und in FR-A-913 241 beschriebene Art der Substitution und Adaption ist mit der erfindungsgemäßen nicht gemeint. Kern des erfindungsgemäßen Verfahrens ist demgegenüber eine zielgerichtete, differenzierte Anpassung von Equidenmilch in allen erforderlichen und/oder derzeit technisch möglichen Substanzgruppen auf der Grundlage einer exakten und detaillierten Kenntnis der Inhaltsstoffe der Equidenmilch, mit dem Ziel, zum Beispiel an die heute üblichen Standards für Säuglings- und Frühgeborenennahrung oder diese Standards übertreffende Anpassungen vorzunehmen. Die erfindungsgemäße Art der Anpassung war den Autoren der zitierten Schriften nicht möglich, da ihnen die Kenntnisse der genauen Inhaltsstoffe der Equidenmilch fehlten. Die genannten Arten der Anpassungen an Frauenmilch sind nicht Teil des erfindungsgemäßen Verfahrens. Sie werden als Stand der Technik vorausgesetzt.

Das erfindungsgemäße Verfahren beginnt bei der Auswahl der Ausgangssubstanzen, die zur Herstellung der Diätnahrungen benötigt werden. Es werden Milch, Milchbestandteile und Milchprodukte von Equiden jeweils so ausgewählt, dass sie in ihrer Zusammensetzung der Rezeptur der Diätnahrung schon so nahe wie möglich kommen. Auch ist die Kombination der Milchen unterschiedlicher Säugetiere mit Equidenmilch denkbar. Je nach Einsatzgebiet der Diätnahrung ist auch die Kombination mit allen anderen zu Ernährung und/oder therapeutischen Behandlung des Menschen bekannten Substanzquellen und Nährstoffquellen denkbar. Die genannten Substanzquellen werden mit dem Ziel kombiniert, schon durch die Kombination eine möglichst große Annäherung an die physiologischen Erfordernisse der jeweils angestrebten Diätnahrung zu erzielen.

Die bisher beschriebene Adaption wird durch verschiedene Faktoren erhöht. Eine weitere Anpassung ist zum Beispiel durch die Ausnutzung rassenmäßiger Unterschiede in der Milchzusammensetzung der Equiden möglich, um je nach Bedarf zum Beispiel eine protein-, fett-, mineral- oder kohlenhydratreichere beziehungsweise -ärmere Nahrung zu erhalten. Weiterhin lässt sich durch gezielte Fütterung in gewissen Grenzen Einfluss auf die biochemische Zusammensetzung der Equidenmilch nehmen. Eine weitere Möglichkeit der Einflussnahme auf die biochemische Zusammensetzung ist die Berücksichtigung des Laktationsstadiums bei der Milchverwendung. Andere Einflussnahmen sind durch die Auswahl des Melkzeitpunktes, der Länge des Melkzyklus sowie der Melkkautelen möglich. Auf diese Weise lässt sich besonders auch der Keimgehalt minimieren. Als Beispiel einer Einflussnahme bei der Weiterverarbeitung ist zum Beispiel die gezielte Fermentation von Milchanteilen oder der gesamten Milch zu erwähnen. Eine gezielte Einflussnahme, zum Beispiel auf die negativen Auswirkungen ungezielter mikrobiologischer Zersetzung der Milch durch Lagerung ist die sofortige Verarbeitung nach der Gewinnung im Erzeugerbetrieb. Zur Weiterverarbeitung wären gegebenfalls auch der Einsatz mechanischer oder lebensmitteltechnologischer Verfahren zu zählen. Dies jedoch nur in dem Umfang, wie es zur Erzeugung der jeweiligen Diätnahrung im Sinne der Erfindung erforderlich ist. Die bisher genannten Möglichkeiten der Einflussnahme sind nur beispielhaft. Man kann den hier beschriebenen Teil des erfindungsgemäßen Verfahrens dahingehend zusammenfassen, dass alle Faktoren bei Tierzucht, Tierhaltung, Tierfütterung, bei der Milchgewinnung und - Weiterverarbeitung, die dazu geeignet sind, Einfluss auf die Milchzusammensetzung auszuüben, in gezielter Weise eingesetzt und koordiniert werden, um die zuvor ausgewählte(n) Milch(en) in ihrer Zusammensetzung so zu beeinflussen, dass sie durch diese Faktoren möglichst nahe an die notwendige Zusammensetzung der jeweiligen Diätnahrung angepasst wird. Der Einsatz lebensmitteltechnologischer Verfahren zur Erhöhung der Anpassung ist je nach den Erfordernissen erfindungsgemäß auch möglich.

Nachdem durch die gezielte Auswahl und gegebenfalls Kombination der Ausgangssubstanzen sowie durch gezielte Einflussnahme auf die Entstehung und/oder Herstellung und/oder Weiterverarbeitung der Ausgangssubstanzen eine gewisse Anpassung an die notwendige Zusammensetzung der jeweiligen Diätnahrung stattgefunden hat, erfolgt eine weitere Erhöhung der Anpassung erfindungsgemäß durch den Zusatz oder die Wegnahme von Substanzen (wozu gegebenenfalls zum Beispiel auch Wasser zu zählen ist). Die an sich bekannte Adaption von Nahrungsgemischen an die Notwendigkeiten bestimmter Diätnahrungen wird beim erfindungsgemäßen Verfahren durch weitere Prozesse ergänzt oder ersetzt und so verbessert. Ein wichtiges Verfahren ist das Potenzieren, eine schrittweise verdünnende Verschüttelung, bei der die zu verdünnende Substanz intensiv in das Verdünnungs- oder Umgebungsmedium eingearbeitet wird. Durch diesen Prozess können auch kleinste Substanzmengen, die ohne die Behandlung durch solche Prozesse im menschlichen Organismus keine nachweisbare Wirkung zeigen, im Organismus zur Wirksamkeit zu bringen. Weiterhin sind zu nennen zum Beispiel die mechanische Dispersion von Fetten in Flüssigkeiten zum Beispiel nach der Methode von Junge, Rührverfahren, in denen besondere Bewegungsabläufe vollzogen werden (zum Beispiel lemniskatenförrnige Bewegungen), weiterhin die rhythmische Exposition von Substanzen gegenüber verschiedenen Lichtquellen, um nur einige Verfahren zu nennen. Diese Verfahren finden bisher in der Medizin bei der Heilmittelzubereitung Verwendung, in der Landwirtschaft bei der Zubereitung von Kompost, Dünge- und Pflanzenschutzmitteln. Zur Anwendung in der Adaption von Nährstoffen an die Erfordernisse von Diätnahrungen wurden die Verfahren bisher nicht eingesetzt. Im erfindungsgemäßen Verfahren werden diese Verfahren so eingesetzt, dass sie zur Bearbeitung von Milch und anderen Nährstoffen geeignet werden. Durch den Einsatz dieser umgearbeiteten Verfahren wird erreicht, dass die zugesetzten Substanzen so stark in das Umgebungsmedium (hier im wesentlichen Milch) eingearbeitet werden, dass sie eine enge biophysikalische und/oder biochemische Bindung mit dem Umgebungsmedium eingehen. Dadurch wird erreicht, dass die beigefügten Substanzen in einem viel höherem Grade vom menschlichen Organismus verwertet werden können, als das bei der bisher üblichen Ergänzung (im wesentlichen einfacher Zusatz ohne Prozesse der Einarbeitung im obigen Sinne) von Nährstoffzusammenhängen der Fall ist. Die Folge davon ist, dass vergleichsweise sehr viel geringere Substanzmengen zugefügt werden müssen, um in einer Diätnahrung die gleichen physiologischen Wirkungen zu entfalten, als das nach den bekannten Verfahren der Fall ist.

Die vorliegende Erfindung betrifft also nicht die an sich bekannte übliche Adaption von Milch und/oder anderen Nährstoffen an diätetische Zwecke. Diese wird vielmehr, soweit erforderlich, vorausgesetzt.

Die Erfindung ist insgesamt dadurch gekennzeichnet, dass die zur Adaption an die erforderlichen Bedürfnisse der Diätnahrung nötigen Veränderungen der Zusammensetzung der Ausgangssubstanzen im wesentlichen oder auch vollständig durch Prozesse durchgeführt werden, die den natürlichen Nährstoffzusammenhang der Ausgangssubstanzen weitgehend oder sogar vollständig erhalten und die zugefügten Substanzen so eingliedern, dass wiederum ein vom menschlichen Organismus möglichst gut verwertbarer Stoffzusammenhang entsteht. Um das zu erreichen, werden an die Stelle stark in die natürlichen Substanzgefüge eingreifender physikalischer, chemischer, biochemischer oder gentechnischer Prozesse erfindungsgemäß in der Regel die oben bereits genauer beschriebenen Maßnahmen gesetzt. Es widerspricht jedoch nicht der Erfindung, von allen an sich bekannten lebensmitteltechnologischen oder auch gentechnischen Prozessen Gebrauch zu machen.

Die erfindungsgemäßen Diätnahrungen weichen also in wesentlichen Eigenschaften von den bisher üblichen und als Standard zu bezeichnenden Diätnahrungen ab. Diese Abweichungen haben für den Anwender folgende physiologischen Vorteile:

Die Erfindung verzichtet in der Regel weitgehend auf technologische Prozesse, die das natürliche Nährstoffgefüge der Ausgangssubstanzen zerstören. Dadurch bleiben die Nährstoffe in ihrem natürlichen Gefüge erhalten, was zur Folge hat, dass sie für den menschlichen Organismus erheblich besser verwertbar sind als in künstlichen Nährstoffzusammenhängen, wie sie bei den marktüblichen Diätnahrungen in überwiegender Zahl vorliegen. Die erfindungsgemäß zugesetzten Nährstoffe werden durch die genannten Prozesse intensiv in das Nährstoffgefüge der Ausgangssubstanzen eingearbeitet, so dass auch die zugefügten Substanzen in einem hohen Maße für den menschlichen Organismus verfügbar sind, in einem höheren Maße als das bei üblichen Diätnahrungen der Fall ist.

Erfindungsgemäß werden in der Regel nicht einzelne Komponenten aus dem natürlichen Milchgefüge herausgerissen und nachher mit Fremdsubstanzen zu neuen Nahrungen rekombiniert. Vielmehr bleiben in der Regel auch im Endprodukt Diätnahrung sämtliche in der/den Ausgangssubstanz(en) enthaltenen Substanzen erhalten. Das heißt, zum Beispiel alle Spurenelemente, alle immunologisch wichtigen Substanzen (zum Beispiel Lactoferrin, Lysozym, sekretorisches Immunglobulin A); alle bisher nicht näher erforschten und damit in ihrer Notwendigkeit nicht bekannten Substanzen bleiben auch in der Diätnahrung erhalten. Dadurch wird die Diätnahrung für den Menschen erheblich sicherer. Das soll an einem weiteren Beispiel nochmals erläutert werden. Renner, ein bedeutender Fachmann auf dem Gebiet der Kuhmilchwissenschaft, konnte 1982 noch behaupten, dass ein Zusatz pflanzlicher Fette und Öle zur Kuhmilchpräparationen völlig ausreicht, um diese in genügendem Maße an die physiologischen Bedürfnisse von Säuglingen zu adaptieren. In den letzten Jahren hat man in der Forschung zunehmend die Bedeutung der sehr langkettigen mehrfach ungesättigten Fettsäuren für die Gehirnreifung des Frühgeborenen und des Säuglings erkannt. In Frauenmilch sind diese Fettsäuren im Vergleich mit anderen Säugetiermilchfetten in besonders hohem Maße vorhanden, nicht jedoch in pflanzlichen Fetten und Ölen. Die 1982 noch als ausreichend bezeichnete Adaption mit pflanzlichen Fetten und Ölen wird folgerichtig mittlerweile in Zweifel gezogen. Das ändert jedoch nichts mehr daran, dass Säuglinge und Frühgeborene Jahrzehnte lang mit einer für die ordnungsgemäße Gehirnentwicklung unzureichenden Nahrung ernährt worden sind. In einem natürlicheren Nahrungszusammenhang, hier der Frauenmilch, sind diese Faktoren jedoch sozusagen "automatisch" berücksichtigt.

Erfindungsgemäß wird in der Regel durch gezielte Auswahl der Ausgangssubstanzen (zum Beispiel Equidenmilch, die schon in rohem Zustand etwa so keimarm ist wie handelsübliche pasteurisierte Kuhmilch) und gezielte Einflussnahme auf die Milchgewinnung und -weiterverarbeitung der Keimgehalt der Diätnahrung so weit reduziert, dass keine Verfahren zur Keimereduktion (zum Beispiel Pasteurisieren, Sterilisieren, und so weiter) angewendet werden müssen. Dadurch können im Nährstoffgefüge sämtliche hitzelabilen und oxidationsgefährdeten Substanzen erhalten bleiben (zum Beispiel Lactoferrin, Lysozym, sekretorisches Immunglobulin A, verschiedene Vitamine und Spurenelemente). Das hat zu Folge, dass nicht nur die Ernährungsfunktionen der Diätnahrung verbessert werden, sondern auch immunprotektive Funktionen für den Magen-Darm-Trakt und das gesamte Immunsystem. Diese Eigenschaft wird bisher von praktisch keiner handelsüblichen Diätnahrung erfüllt. Sie ist aber von großer Bedeutung, zum einen für Frühgeborene und Säuglinge, bei denen der Verdauungstrakt und die Stoffwechselorgane noch in der Entwicklung befindlich sind und deshalb eines immunologischen Schutzes bedürfen, auch im Hinblick auf die Vermeidung der Entwicklung von Allergien.

In den letzten Jahren hat die Forschung die physiologische Bedeutung der langkettigen, mehrfach ungesättigten Fettsäuren für die ordnungsgemäße Gehirnentwicklung des Säuglings und vor allem des Frühgeborenen erkannt (siehe auch weiter vor). Hier spielen vor allem Linolsäure, Linolensäure und Arachidonsäure eine Rolle. Linol- und Linolensäure ist beim Vergleich der Säugetiermilchen außer in Frauenmilch in größeren Mengen bei den landwirtschaftlichen Nutztieren nur in der Equidenmilch enthalten, Arachidonsäure nur in Frauenmilch und der Milch eines australischen Kleinsäugetieres. In Equidenmilch wird sie nicht regelmäßig nachgewiesen. Durch das erfindungsgemäße Verfahren läßt sich jedoch der Arachidonsäuregehalt der Equidenmilch deutlich steigern. Damit ist insgesamt ein erheblicher physiologischer Vorteil von erfindungsgemäß hergestellten Säuglings- und Frühgeborenennahrungen gegenüber konventionellen Nahrungen dieser Art verbunden. Dies gilt insbesondere, weil die Herstellung arachidonsäurehaltiger Fettgemische für Säuglings- und Frühgeborenennahrungen bisher nur in aufwendigen und kostspieligen Verfahren realisierbar ist.

Den bisher bekannten, versuchweisen Adaptionen von Stutenmilch an die Erfordernisse von Säuglings- und Frühgeborenennahrungen ist das Produkt durch den erheblich höheren Adaptionsgrad ebenfalls deutlich voraus.

Equidenmilch enthält überlicherweise
Kalium im Mittel weniger als 48 oder mehr als 68 mg/100 ml;
Magnesium im Mittel weniger als 4,6 oder mehr als 10,6 mg/100 ml;
Natrium im Mittel weniger als 9 oder mehr als 19 mg/100 ml,
Chlorid im Mittel weniger als 26 oder mehr als 38 mg/100 ml,
Lactose im Mittel weniger als 5,3 oder mehr als 6,9 g/100 ml,
Maltodextrine im Mittel mehr als 10 mg/100 ml,
Oligosaccharide im Mittel weniger als 50 oder mehr als 150 mg/100 ml,
N-Acetyl-Neuraminsäure im Mittel weniger als 5,1 oder mehr als 6,1 mg/100 ml,
Leucin im Mittel weniger als 160 oder mehr als 200 mg/100 ml,
Methionin im Mittel weniger als 23 oder mehr als 63 mg/100 ml,
Threonin im Mittel in weniger als 60 oder mehr als 95 mg/100 ml,
Tryptophan im Mittel weniger als 10 oder mehr als 30 mg/100 ml,
Valin im Mittel weniger als 80 oder mehr als 140 mg/100 ml,
Asparaginsäure im Mittel weniger als 168 oder mehr als 188 mg/100 ml,
Cystin im Mittel weniger als 18 oder mehr als 28 mg/100 ml,
Glycin im Mittel weniger als 30 oder mehr als 40 mg/100 ml,
Prolin im Mittel weniger als 150 oder mehr als 160 mg/100 ml,
Lysin im Mittel weniger als 131 oder mehr als 191 mg/100 ml,
Taurin im Mittel weniger als 0,9 oder mehr als 2,9 mg/100 ml,
Caprinsäure im Mittel weniger als 31 oder mehr als 81 mg/100 ml,
Laurinsäure im Mittel weniger als 34 oder mehr als 114 mg/100 ml,
Myristinsäure im Mittel weniger als 58 oder mehr als 98 mg/100 ml,
Palmitinsäure im Mittel weniger als 208 oder mehr als 308 mg/100 ml,
Stearinsäure im Mittel weniger als 8 oder mehr als 22 mg/100 ml,
Myristoleinsäure im Mittel weniger als 6 oder mehr als 27 mg/100 ml,
Palmitoleinsäure im Mittel weniger als 70 oder mehr als 160 mg/100 ml,
Ölsäure im Mittel weniger als 199 oder mehr als 329 mg/100 ml,
Linolsäure im Mittel weniger als 73 oder mehr als 213 mg/100 ml,
Linolensäure im Mittel weniger als 77 oder mehr als 287 mg/100 ml,
gamma-Linolensäure im Mittel mehr als 1 mg/100 ml,
Arachidonsäure im Mittel mehr als 8 mg/100 ml,
Gesamt-Carnitin im Mittel mehr als 1 mg/100 ml,
Lezithin im Mittel weniger als 5 oder mehr als 29 mg/100 ml,
Vitamin B1 im Mittel weniger als 22 oder mehr als 36 µg/100 ml,
Vitamin B2 im Mittel weniger als 21 oder mehr als 45 µg/100 ml,
Vitamin B3 im Mittel weniger als 45 oder mehr als 125 µg/100 ml,
Vitamin B6 im Mittel weniger als 15 oder mehr als 30 µg/100 ml,
Vitamin B12 im Mittel weniger als 250 oder mehr als 290 ng/100 ml,
Vitamin C im Mittel weniger als 3 oder mehr als 11 mg/100 ml,
Folsäure im Mittel weniger als 2 oder mehr als 8 µg/100 ml,
Pantothensäure im Mittel weniger als 170 oder mehr als 290 µg/100 ml,
Biotin im Mittel weniger als 1,2 oder mehr als 1,6 µg/100 ml,
Cholin im Mittel weniger als 1 oder mehr als 10 mg/100 ml,
Vitamin-D-Sulfat im Mittel weniger als 0,32 oder mehr als 0,72 µg/100 ml,
Inosit im Mittel weniger als 10 oder mehr als 30 mg/100 ml,
Vitamin A im Mittel weniger als 25 oder mehr als 75 µg/100 ml,
Carotinoide im Mittel weniger als 21 oder mehr als 39 µg/100 ml,
Vitamin D im Mittel weniger als 0,2 oder mehr als 1,0 µg/100 ml,
Vitamin E im Mittel weniger als 0,05 oder mehr als 0,09 mg/100 ml,
Vitamin K im Mittel weniger als 0,7 oder mehr als 1,3 µg/100 ml,
Eisen im Mittel weniger als 40 oder mehr als 100 µg/100 ml,
Kupfer im Mittel weniger als 25 oder mehr als 45 µg/100 ml,
Zink im Mittel weniger als 130 oder mehr als 230 µg/100 ml,
Chrom im Mittel weniger als 0,1 oder mehr als 0,9 µg/100 ml,
Kobalt im Mittel weniger als 8 oder mehr als 12 µg/100 ml,
Mangan im Mittel weniger als 2,4 oder mehr als 4,4 µg/100 ml,
Molybdän im Mittel weniger als 0,2 oder mehr als 0,8 µg/100 ml,
Selen im Mittel weniger als 0,2 oder mehr als 0,8 µg/100 ml,
Jod im Mittel weniger als 1 oder mehr als 3 µg/100 ml,
Brom im Mittel weniger als 10 oder mehr als 170 µg/100 ml,
Fluor im Mittel weniger als 5 oder mehr als 15 µg/100 ml,
Cytidinmonophosphat im Mittel weniger als 950 oder mehr als 1050 µg/100 ml,
Inosinmonophosphat im Mittel weniger als 5 oder mehr als 15 µg/100 ml,
Cytidin im Mittel weniger als 100 oder mehr als 140 µg/100 ml,
Inosin im Mittel weniger als 11 oder mehr als 13 µg/100 ml und/oder
Acetylcholin im Mittel weniger als 90 oder mehr als 110 µg/100 ml.

Das erfindungsgemäße Verfahren kann auf unterschiedliche Darreichungsformen angewendet werden:

Der Vertrieb als nicht konserviertes Frischprodukt ist aufgrund der natürlicherweise begrenzten Haltbarkeit in der Regel auf das unmittelbare Umfeld des Erzeugerbetriebes beschränkt.

Eine schonende Methode der Haltbarmachung ist zum Beispiel das Schockgefrieren des frischen Produktes bei circa -60 °C zum Beispiel nach Konfektionierung in 250 ml Beuteln. Das Produkt kann in dieser Form zum Beispiel in Spezialbehältern im Eilpaketversand vertrieben werden.

Eine weitere Möglichkeit ist die Pulverisierung des Endproduktes mit Rehydratisierung vorzugweise mit mineralarmem Wasser bei Gebrauch. Entsprechend der Oxidations- und Hitzeempfindlichkeit des Produktes würde sich vorzugweise die Gefriertrocknung anbieten.

### Ausführungsbeispiele:

### Erläuterungen:

Osmosewasser ist Wasser, das durch den Prozess der Gegenstromosmose hergestellt wird. Im Prinzip wird hierbei Leitungswasser nach Reinigung durch ein Aktivkohle-Filter unter Druck durch eine Dünnfilmmembran gedrückt, welche durch Laserstrahlen zuvor so perforiert wurde, dass praktisch nur Wassermoleküle permeieren können. Das Verfahren kann auch als eine Art Ultrafiltration von Leitungswasser bezeichnet werden. Nach der Filtration wird eine erneute Reinigung durch Aktivkohle-Filter vorgenommen. Entsprechende Fertiggeräte, die das Osmosewasser liefern, sind im Handel erhältlich. Das damit hergestellte Wasser zeichnet sich dadurch aus, dass es zu 95% und mehr von allen enthaltenen Mineralien, Spurenelementen, Giftstoffen und so weiter gereinigt ist, es sich also nahezu um reines Wasser handelt.

Osmosewasser wird in den jeweiligen Beispielen benötigt, um den Proteingehalt der Nahrung zu verringern.

Die Beispiele enthalten alle wesentlichen Prozessschritte des erfindungsgemäßen Verfahrens. Aus der erfindungsgemäßen Lehre lassen sich jedoch auch wesentlich komplexere Produktionsverfahren ableiten, wie sie zur Herstellung höher adaptierter Diätnahrungen gemäß Verfahren auch notwendig sind. Dementsprechend ist die Erfindung nicht auf die Ausführungsbeispiele beschränkt.

### Beispiel 1:

Herstellung einer tiefgefrorenen Säuglingsnahrung (Casein: Molkenprotein ca. 50:50) mit ca. 1.35 % Rohproteinanteil
Ansatz 100 kg
45 I frisch gemolkene Stutenmilch (Herdensammelmilch) der AFriesen@-Rasse; 48,5 I Osmosewasser; 2 kg Maltodextrin; 2 kg Lactose; 2,5 kg gereinigtes Sonnenblumenöl; 20 g NaCI; 30 g KCI; 10 g Taurin; 2 g Nucleotide (AMP, CMP, GMP, UMP zu gleichen Anteilen); 80000 I.E. Retinylpalmitat; 20000 I.E. Ergocalciferol; 500 mg alpha-Tocopherolacetat; 50 mg Thiamin-HCI; 65 mg Riboflavin; 50 mg Pyridoxin-HCl; 500 mg Nicotinamid; 1 g L-Ascorbinsäure; 200 mg D-Panthenol; 30 mg Folsäure; 800 mg Eisenlactat; 400 mg ZnCI; 60 mg Cu-Citrat; 20 mg Na-Jodid;

45 I Stutenmilch wurden zusammen mit den 2,5 kg gereinigtem Sonnenblumenöl und den fettlöslichen Vitaminen (Retinylpalmitat, Ergocalciferol, alpha-Tocopherol) in einen Bottich gegeben, in den ein Spezialrührwerk eintauchte. Das Rührwerk besaß einen T-förmigen Quirl (Länge 3 cm, in einem Gehäuse, das an der Seite und oben mehrere kreisförmige Öffnungen (5 mm Durchmesser) besaß. Mit diesem Rührwerk wurde das Gemisch etwa 15 Minuten bei etwa 200 Upm gerührt, was eine vollständige und dauerhafte Emulgation des Fettes und der fettlöslichen Vitamine in der Milch bewirkte.

Parallel dazu wurden die übrigen Zusätze in einem weiteren größeren Becken zu den 48,5 I Osmosewasser gegeben. in dieses Becken tauchte ein Rührwerk ein, welches lemniskatenförmige Rührbewegungen durchführte (12/ Minute), ebenfalls 15 Minuten.

Dann wurde das vorbehandelte Stutenmilch-Fett-Vitamin-Gemisch in den großen Bottich gegeben, der die restlichen Substanzen enthielt und weitere 15 Minuten gerührt.

Das so gefertigte Produkt wurde sofort in 250 ml Beutel abgepackt, verschweißt und bei -60 EC schockgefroren.

Zum Verbrauch musste die Milch aufgetaut und leicht erwärmt werden.

| Einiqe Inhaltsstoffe, Mittelwerte | |
|---|---|
| | Einheit: |
| Lactose | g/ 100ml 5.0 |
| Maltodextrin | g/ 100ml 2.0 |
| Gesamtfett | g/ 100ml 3.2 |
| Protein | g/ 100ml 1.35 |
| Monomeres β-Lactoglobulin | % v. ges. Lact.glob. 100 |
| beta-Casein/alpha-s-Casein | ca. 4,2 |
| Orotsäure | µg/ 100ml 90 |
| Niacin | µg/ 100ml 540 |
| Vitamin E/ Linolsäureäquiv. | mg-alpha-TE/g ca. 0,9 |
| Vitamin B₆/ Rohprotein | mg/ g 45 |
| Natrium | mg/ 100ml 20 |
| Kalium | mg/ 100ml 30 |
| Calcium | mg/ 100ml 50 |
| Magnesium | mg/ 100ml 4 |
| Phosphor | mg/ 100ml 28 |
| Chlorid | mg/ 100ml 28 |

### Beispiel 2:

Herstellung einer tiefgefrorenen Säuglingsnahrung (Casein: Molkenprotein ca. 50:50) mit ca. 1.35 % Rohproteinanteil mit einem an Frauenmilchverhältnisse angeglichenen Arachidonsäuregehalt (essentielle, mehrfach ungesättigte, langkettige Fettsäure) :
Verfahren wie in Beispiel 1 mit folgender Abweichung:
Verwendung von Stutenmilch der Haflinger-Rasse, Herdensammelmilch, wobei die Tiere zum Zeitpunkt der Milchgewinnung und mindestens 2 Wochen zuvor zusätzlich zum normalen Futter mit einer in Gelatine gekapselten Hühnereizubereitung gefüttert wurden.

| Einige Inhaltsstoffe, Mittelwerte | |
|---|---|
| | Einheit; |
| Arachidonsäure | mg/100ml mindestens 16 |
| sonstige Inhaltsstoffe wie in Beispiel 1. | |

### Beispiel 3:

Herstellung einer gefriergetrockneten Frühgeborenennahrung (Casein: Molkenprotein ca. 45:55) mit ca. 1,9 % Rohproteingehalt und einem gegenüber konventionellen Frühgeborenennahrungen mit Fettzusatz erhöhten Bioverfügbarkeit der Fettfraktion und der fettlöslichen Vitamine.
Ansatz: 100kg
45 I Milch von Shetland-Ponys (Herdensammelmilch); 45 I Stuten-Milch der Steppen-Rassen (Orlov, Kirgisen) (Herdensammelmilch); 7 I Osmosewasser; 1.5 kg Lactose; 1,3 kg gereinigtes Sonnenblumenöl; 1,0 kg gereinigtes Kokosfett; 20 g NaCI; 4 g Taurin; 2 g Nucleotide (AMP, CMP, GMP, UMP zu gleichen Anteilen); 500 mg L-Carnitin-HCI; 80000 I.E. Retinylpalmitat; 20000 I.E. Ergocalciferol; 500 mg alpha-Tocopherolacetat; 5 mg Phytomenadion; 50 mg Thiamin-HCI; 65 mg Riboflavin; 70 mg Pyridoxin-HCl; 400 mg Nicotinamid; 200 mg D-Panthenol; 100 mg Folsäure; 800 mg Eisenlactat; 400 mg ZnCI; 60 mg Cu-Citrat; 20mg Na-Jodid;

Das Sonnenblumenöl wurde gemeinsam mit dem Kokosfett in einem Bottich gerade so erwärmt, dass das Kokosfett flüssig wurde. Dann wurden die fettlöslichen Vitamine hinzugegeben. Das Gemisch wurde mit dem in Beispiel 1 beschriebenen Dispersionsrührwerk 15 Minuten homogenisiert.

Sämtliche anderen Nahrungsbestandteile wurden im großen Bottich wie in Beispiel 1 mit dem lemniskatenförmigen Rührwerk 30 Minuten gerührt.

Dieses Gemisch wurde nun in einen anderen Bottich gegossen, an welchem eine Pumpe angeschlossen war, welche die Flüssigkeit aus dem Bottich an seinem tiefsten Punkt absaugen konnte. Die abgesaugte Flüssigkeit wurde durch ein Gerät, welches seine Öffnung über dem Bottich hatte, wieder in die Wanne geleitet. Das besagte Gerät konnte nach dem Prinzip einer Wasserstrahlpumpe aus einem oberhalb des Gerätes liegenden Trichter, der mit einer düsenförmigen Öffnung in das Gerät hineinragt, Flüssigkeit aus diesem Trichter ansaugen und die eingesaugte Flüssigkeit so in der durchgeleiteten Flüssigkeit sehr fein verteilen. Die gesamte Anlage war gekapselt, um unter weitgehendem Luftabschluß arbeiten zu können. In den beschriebenen Trichter wurde nun so lange das vorbereitete Fett-Vitamin-Gemisch gegossen, bis das gesamte Gemisch in der im Zirkulationskreislauf durchgepumpten Flüssigkeit verteilt war.

Das entstandene Produkt wurde unmittelbar daran anschließend gefriergetrocknet und in Gläsern zu je 120 g gefriergetrockneten Pulvers konfektioniert.

Die trinkfertige Milch wurde durch Auflösen von 120 g Pulver in 900 ml Wasser bei leichter Erwärmung zubereitet.

| Einige Inhaltsstoffe, Mittelwert | |
|---|---|
| | Einheit: |
| Lactose | g/ 100ml 7,4 |
| Maltodextrin | g/ 100ml 0 |
| Gesamtfett | g/ 100ml 3,8 |
| Protein | g/ 100ml 1,9 |
| Monomeres beta-Lactoglobulin | % v. ges. Lact.glob. 100 |
| beta-Casein/alpha-s-Casein | ca. 4,0 |
| Orotsäure | µg/ 100ml 0,2 |
| Niacin | µg/100ml 490 |
| Vitamin E/ Linolsäureäquiv. | mg-alpha-TE/g ca. 0,9 |
| Vitamin B₆/ Rohprotein | mg/ g 50 |
| Natrium | mg/ 100ml 25 |
| Kalium | mg/ 100ml 58 |
| Calcium | mg/100ml 95 |
| Magnesium | mg/ 100ml 7,5 |
| Phosphor | mg/ 100ml 50 |
| Chlorid | mg/100ml 45 |

## Patentansprüche

1. Diätnahrungen für Säuglinge und Frühgeborene aus Milch, Milchbestandteilen und Milchprodukten von Equiden mit einem Fettsäurengehalt der langkettigen, mehrfach ungesättigten Fettsäuren, der dem im wesentlichen üblicher Frauenmilch entspricht, enthaltend einen Fettzusatz pflanzlicher und/oder tierischer Herkunft.

2. Diätnahrung nach Anspruch 1, **dadurch gekennzeichnet, dass**
Kalium im Mittel weniger als 48 oder mehr als 68 mg/100 ml,
Magnesium im Mittel weniger als 4,6 oder mehr als 10,6 mg/100 ml;
Natrium im Mittel weniger als 9 oder mehr als 19 mg/100 ml,
Chlorid im Mittel weniger als 26 oder mehr als 38 mg/100 ml,
Lactose im Mittel weniger als 5,3 oder mehr als 6,9 g/100 ml,
Maltodextrine im Mittel mehr als 10 mg/100 ml,
Oligosaccharide im Mittel weniger als 50 oder mehr als 150 mg/100 ml,
N-Acetyl-Neuraminsäure im Mittel weniger als 5,1 oder mehr als 6,1 mg/100 ml,
Leucin im Mittel weniger als 160 oder mehr als 200 mg/100 ml,
Methionin im Mittel weniger als 23 oder mehr als 63 mg/100 ml,
Threonin im Mittel weniger als 60 oder mehr als 95 mg/100 ml,
Tryptophan im Mittel weniger als 10 oder mehr als 30 mg/100 ml,
Valin im Mittel weniger als 80 oder mehr als 140 mg/100 ml,
Asparaginsäure im Mittel weniger als 168 oder mehr als 188 mg/100 ml,
Cystin im Mittel weniger als 18 oder mehr als 28 mg/100 ml,
Glycin im Mittel weniger als 30 oder mehr als 40 mg/100 ml,
Prolin im Mittel weniger als 150 oder mehr als 160 mg/100 ml,
Lysin im Mittel weniger als 131 oder mehr als 191 mg/100 ml,
Taurin im Mittel weniger als 0,9 oder mehr als 2,9 mg/100 ml,
Caprinsäure im Mittel weniger als 31 oder mehr als 81 mg/100 ml,
Laurinsäure im Mittel weniger als 34 oder mehr als 114 mg/100 ml,
Myristinsäure im Mittel weniger als 58 oder mehr als 98 mg/100 ml,
Palmitinsäure im Mittel weniger als 208 oder mehr als 308 mg/100 ml,
Stearinsäure im Mittel weniger als 8 oder mehr als 22 mg/100 ml,
Myristoleinsäure im Mittel weniger als 6 oder mehr als 27 mg/100 ml,
Palmitoleinsäure im Mittel weniger als 70 oder mehr als 160 mg/100 ml,
Ölsäure im Mittel weniger als 199 oder mehr als 329 mg/100 ml,
Linolsäure im Mittel weniger als 73 oder mehr als 213 mg/100 ml,
Linolensäure im Mittel weniger als 77 oder mehr als 287 mg/100 ml,
gamma-Linolensäure im Mittel mehr als 1 mg/100 ml,
Arachidonsäure im Mittel mehr als 8 mg/100 ml,
Gesamt-Carnitin im Mittel mehr als 1 mg/100 ml,
Lezithin im Mittel weniger als 5 oder mehr als 29 mg/100 ml,
Vitamin B1 im Mittel weniger als 22 oder mehr als 36 µg/100 ml,
Vitamin B2 im Mittel weniger als 21 oder mehr als 45 µg/100 ml,
Vitamin B3 im Mittel weniger als 45 oder mehr als 125 µg/100 ml,
Vitamin B6 im Mittel weniger als 15 oder mehr als 30 µg/100 ml,
Vitamin B12 im Mittel weniger als 250 oder mehr als 290 ng/100 ml,
Vitamin C im Mittel weniger als 3 oder mehr als 11 mg/100 ml,
Folsäure im Mittel weniger als 2 oder mehr als 8 µg/100 ml,
Pantothensäure im Mittel weniger als 170 oder mehr als 290 µg/100 ml,
Biotin im Mittel weniger als 1,2 oder mehr als 1,6 µg/100 ml,
Cholin im Mittel weniger als 1 oder mehr als 10 mg/100 ml,
Vitamin-D-Sulfat im Mittel weniger als 0,32 oder mehr als 0,72 µg/100 ml,
Inosit im Mittel weniger als 10 oder mehr als 30 mg/100 ml,
Vitamin A im Mittel weniger als 25 oder mehr als 75 µg/100 ml,
Carotinoide im Mittel weniger als 21 oder mehr als 39 µg/100 ml,
Vitamin D im Mittel weniger als 0,2 oder mehr als 1,0 µg/100 ml,
Vitamin E im Mittel weniger als 0,05 oder mehr als 0,09 mg/100 ml,
Vitamin K im Mittel weniger als 0,7 oder mehr als 1,3 µg/100 ml,
Eisen im Mittel weniger als 40 oder mehr als 100 µg/100 ml,
Kupfer im Mittel weniger als 25 oder mehr als 45 µg/100 ml,
Zink im Mittel weniger als 130 oder mehr als 230 µg/100 ml,
Chrom im Mittel weniger als 0,1 oder mehr als 0,9 µg/100 ml,
Kobalt im Mittel weniger als 8 oder mehr als 12 µg/100 ml,
Mangan im Mittel weniger als 2,4 oder mehr als 4,4 µg/100 ml,

3. Diätnahrung nach Anspruch 1 oder 2, **dadurch gekennzeichnet, dass** eine oder mehrere der natürlicherweise in Equidenmilch vorkommenden Substanzen Gehalte außerhalb ihrer natürlichen Mittelwerte in Equidenmilch aufweisen.

4. Diätnahrungen nach einem der Ansprüche 2 oder 3, **dadurch gekennzeichnet, dass** die Gehalte anteilig um den Betrag zugesetzten oder entfernten Wassers vermindert oder erhöht wird.

5. Verfahren zur Herstellung von Diätnahrungen nach einem der Ansprüche 1 bis 4,
**dadurch gekennzeichnet, dass** man
a) Milch, Milchbestandteile und/oder Milchprodukte von Equiden kombiniert mit
aa) zur Ernährung des Menschen geeigneten Substanzen in isolierter Form und/oder in den Stoffzusammenhängen von Nahrungsmitteln, ausgewählt aus folgenden Substanzklassen und ihren Untergruppen: Proteine und ihre Bestandteile und Derivate, Fette und ihre Bestandteile und Derivate, Kohlenhydrate und ihre Bestandteile und Derivate, Mineralstoffe und ihre Bestandteile und Derivate, Vitamine und ihre Bestandteile und Derivate, vitaminähnlich wirksame Substanzen und ihre Bestandteile und Derivate, insbesondere sekundäre Pflanzenstoffe, Enzyme und ihre Derivate, Nucleinsäuren und ihre Derivate, Hormone und hormonähnlich wirksame Substanzen und ihre Derivate, insbesondere Acetylcholin
bb) zur therapeutischen Behandlung des Menschen geeignete Substanzen
Molybdän im Mittel weniger als 0,2 oder mehr als 0,8 µg/100 ml,
Selen im Mittel weniger als 0,2 oder mehr als 0,8 µg/100 ml,
Jod im Mittel weniger als 1 oder mehr als 3 µg/100 ml,
Brom im Mittel weniger als 10 oder mehr als 170 µg/100 ml,
Fluor im Mittel weniger als 5 oder mehr als 15 µg/100 ml,
Cytidinmonophosphat im Mittel weniger als 950 oder mehr als 1050 µg/100 ml,
Inosinmonophosphat im Mittel weniger als 5 oder mehr als 15 µg/100 ml,
Cytidin im Mittel weniger als 100 oder mehr als 140 µg/100 ml,
Inosin im Mittel weniger als 11 oder mehr als 13 µg/100 ml und/oder
Acetylcholin im Mittel weniger als 90 oder mehr als 110 µg/100 ml
enthalten ist.

6. Verfahren nach Anspruch 5, **dadurch gekennzeichnet, dass** man die Kombination mit Substanzen gemäß Anspruch 5 a), aa) teilweise oder vollständig mit Präparationen aus zur Ernährung des Menschen geeigneten natürlichen Lebensmitteln durchführt.

7. Verfahren nach Anspruch 5 oder 6, **dadurch gekennzeichnet, dass** man die Kombination mit Substanzen durch
physikalisch-chemische Einarbeitung der Substanzen in Milch, Milchbestandteile und/oder Milchprodukte, insbesondere durch Einrühren durch Rührwerke mit lemniskatenförmigen Rührbewegungen,
Verschütteln der zuzusetzenden Substanzen mit einem Teil der Milch, Milchbestandteile und Milchprodukte,
mechanische Dispersion der zuzusetzenden Substanzen in Milch, Milchbestandteile und/oder Milchprodukte und/oder
gezielte Exposition von Produktstufen gegenüber Lichtquellen vornimmt.

8. Verfahren nach einem der Ansprüche 5 bis 7, **dadurch gekennzeichnet, dass** man den milchspendenden Equiden Substanzen direkt zuführt, insbesondere durch die Verfütterung von Hühnereipräparationen an Equiden.

9. Verfahren nach einem der Ansprüche 5 bis 8, **dadurch gekennzeichnet, dass** man eine Anpassung der in der Equidenmilch vorkommenden Immunfaktoren teilweise oder vollständig durch Maßnahmen der Tierhaltung vornimmt, insbesondere durch Einbringung von Mikroorganismen in die Umgebung der milchspendenden Equiden und/oder durch Impfung der milchspendenden Equiden mit geeigneten Substanzen.

10. Verfahren nach einem der Ansprüche 5 bis 9, **dadurch gekennzeichnet, dass** man keine Verfahren zur Keimreduktion anwendet, die negativen Einfluss auf die Inhaltsstoffe des Produktes haben.

11. Verfahren nach einem der Ansprüche 5 bis 10, **dadurch gekennzeichnet, dass** man während des Adaptionsverfahrens Temperaturen unter 63 °C, insbesondere 42 °C einstellt.

12. Verfahren nach einem der Ansprüche 5 bis 11, **dadurch gekennzeichnet, dass** man die Konzentration der verwendeten Equidenmilch durch Zusatz oder Entzug von Wasser verändert.

## Claims

1. Dietetic foods for infants and premature babies, consisting of milk, milk components and milk products from equids having a fatty acid content in long-chained polyunsaturated fatty acids which essentially corresponds to that of common human milk, containing an added lipid of vegetable and/or animal origin.

2. The dietetic food according to claim 1, **characterized by** containing
potassium, on average, at less than 48 or at more than 68 mg/100 ml;
magnesium, on average, at less than 4.6 or at more than 10.6 mg/100 ml;
sodium, on average, at less than 9 or at more than 19 mg/100 ml;
chloride, on average, at less than 26 or at more than 38 mg/100 ml;
lactose, on average, at less than 5.3 or at more than 6.9 g/100 ml;
maltodextrin, on average, at more than 10 mg/100 ml;
oligosaccharides, on average, at less than 50 or at more than 150 mg/100 ml;
N-acetylneuraminic acid, on average, at less than 5.1 or at more than 6.1 mg/100 ml;
leucine, on average, at less than 160 or at more than 200 mg/100 ml;
methionine, on average, at less than 23 or at more than 63 mg/100 ml;
threonine, on average, at less than 60 or at more than 95 mg/100 ml;
tryptophan, on average, at less than 10 or at more than 30 mg/100 ml;
valine, on average, at less than 80 or at more than 140 mg/100 ml;
aspartic acid, on average, at less than 168 or at more than 188 mg/100 ml;
cystine, on average, at less than 18 or at more than 28 mg/100 ml;
glycine, on average, at less than 30 or at more than 40 mg/100 ml;
proline, on average, at less than 150 or at more than 160 mg/100 ml;
lysine, on average, at less than 131 or at more than 191 mg/100 ml;
taurine, on average, at less than 0.9 or at more than 2.9 mg/100 ml;
capric acid, on average, at less than 31 or at more than 81 mg/100 ml;
lauric acid, on average, at less than 34 or at more than 114 mg/100 ml;
myristic acid, on average, at less than 58 or at more than 98 mg/100 ml;
palmitic acid, on average, at less than 208 or at more than 308 mg/100 ml;
stearic acid, on average, at less than 8 or at more than 22 mg/100 ml;
myristoleic acid, on average, at less than 6 or at more than 27 mg/100 ml;
palmitoleic acid, on average, at less than 70 or at more than 160 mg/100 ml;
oleic acid, on average, at less than 199 or at more than 329 mg/100 ml;
linolic acid, on average, at less than 73 or at more than 213 mg/100 ml;
linolenic acid, on average, at less than 77 or at more than 287 mg/100 ml;
gamma-linolenic acid, on average, at more than 1 mg/100 ml;
arachidonic acid, on average, at more than 8 mg/100 ml;
total carnitine, on average, at more than 1 mg/100 ml;
lecithin, on average, at less than 5 or at more than 29 mg/100 ml;
vitamin B1, on average, at less than 22 or at more than 36 µg/100 ml;
vitamin B2, on average, at less than 21 or at more than 45 µg/100 ml;
vitamin B3, on average, at less than 45 or at more than 125 µg/100 ml;
vitamin B6, on average, at less than 15 or at more than 30 µg/100 ml;
vitamin B12, on average, at less than 250 or at more than 290 ng/100 ml;
vitamin C, on average, at less than 3 or at more than 11 mg/100 ml;
folic acid, on average, at less than 2 or at more than 8 µg/100 ml;
pantothenic acid, on average, at less than 170 or at more than 290 µg/100 ml;
biotin, on average, at less than 1.2 or at more than 1.6 µg/100 ml;
choline, on average, at less than 1 or at more than 10 mg/100 ml;
vitamin D sulfate, on average, at less than 0.32 or at more than 0.72 µg/100 ml;
inositol, on average, at less than 10 or at more than 30 mg/100 ml;
vitamin A, on average, at less than 25 or at more than 75 µg/100 ml;
carotenoids, on average, at less than 21 or at more than 39 µg/100 ml;
vitamin D, on average, at less than 0.2 or at more than 1.0 µg/100 ml;
vitamin E, on average, at less than 0.05 or at more than 0.09 mg/100 ml;
vitamin K, on average, at less than 0.7 or at more than 1.3 µg/100 ml;
iron, on average, at less than 40 or at more than 100 µg/100 ml;
copper, on average, at less than 25 or at more than 45 µg/100 ml;
zinc, on average, at less than 130 or at more than 230 µg/100 ml;
chromium, on average, at less than 0.1 or at more than 0.9 µg/100 ml;
cobalt, on average, at less than 8 or at more than 12 µg/100 ml;
manganese, on average, at less than 2.4 or at more than 4.4 µg/100 ml;
molybdenum, on average, at less than 0.2 or at more than 0.8 µg/100 ml;
selenium, on average, at less than 0.2 or at more than 0.8 µg/100 ml;
iodine, on average, at less than 1 or at more than 3 µg/100 ml;
bromine, on average, at less than 10 or at more than 170 µg/100 ml;
fluorine, on average, at less than 5 or at more than 15 µg/100 ml;
cytidine monophosphate, on average, at less than 950 or at more than 1050 µg/100 ml;
inosine monophosphate, on average, at less than 5 or at more than 15 µg/100 ml;
cytidine, on average, at less than 100 or at more than 140 µg/100 ml;
inosine, on average, at less than 11 or at more than 13 µg/100 ml; and/or
acetylcholine, on average, at less than 90 or at more than 110 µg/100 ml.

3. The dietetic food according to claim 1 or 2, **characterized in that** one or more of the substances naturally occurring in equid milk are present in contents which are outside their natural averages in equid milk.

4. Dietetic foods according to any of claims 1 to 3, **characterized in that** the contents are proportionally reduced or increased by the proportion of water added or withdrawn.

5. A process for the preparation of dietetic foods according to any of claims 1 to 4, **characterized by**:
a) combining milk, milk components and/or milk products from equids with
aa) substances suitable for human nutrition in isolated form and/or in the material context of foods, selected from the following classes of substances and their subgroups: proteins and their components and derivatives, lipids and their components and derivatives, carbohydrates and their components and derivatives, minerals and their components and derivatives, vitamins and their components and derivatives, substances having effects similar to those of vitamins and their components and derivatives, especially secondary plant substances, enzymes and their derivatives, nucleic acids and their derivatives, hormones and substances having effects similar to those of hormones and their derivatives, especially acetylcholine;
bb) substances suitable for the therapeutic treatment of humans;
cc) milk, milk components and/or milk products from equids and/or mammals other than equids; and/or
b) adapting milk from equids to the requirements of dietetic foods by measures selected from animal breeding, animal keeping, animal nutrition, milk recovery, milk processing.

6. The process according to claim 5, **characterized in that** said combining with substances according to claim 5 a), aa) is partially or completely effected with preparations from natural foodstuffs suitable for human nutrition.

7. The process according to claim 5 or 6, **characterized in that** said combining with substances is effected by
physicochemical incorporation of the substances into milk, milk components and/or milk products, especially by stirring in using agitators exhibiting lemniscate-like agitating motions;
shaking the substances to be added with part of the milk, milk components and milk products;
mechanical dispersion of the substances to be added in milk, milk components and/or milk products; and/or
well-aimed exposure of product stages to light sources.

8. The process according to any of claims 5 to 7, **characterized in that** substances are directly supplied to the milk-donating equids, especially by the feeding of hen's egg preparations to equids.

9. The process according to any of claims 5 to 8, **characterized in that** an adaptation of the immune factors occurring in the equid milk is partially or completely effected by measures in animal keeping, especially by introducing microorganisms in the environment of the milk-donating equids and/or by vaccinating the milk-donating equids with suitable substances.

10. The process according to any of claims 5 to 9, **characterized in that** methods of germ reduction which have a negative influence on the components of the product are not employed.

11. The process according to any of claims 5 to 10, **characterized in that** temperatures of below 63 °C, especially 42 °C, are set during the adaptation process.

12. The process according to any of claims 5 to 11, **characterized in that** the concentration of the equid milk employed is changed by the addition or withdrawal of water.

## Revendications

1. Aliments diététiques pour nourrissons et prématurés, constitués de lait, de constituants du lait et de produits laitiers d'équidés, ayant une teneur en acides gras, en ce qui concerne les acides gras à longue chaîne poly-insaturés, qui correspond sensiblement à celle du lait de femme usuel, contenant un additif gras d'origine végétale et/ou animale.

2. Aliment diététique selon la revendication 1, **caractérisé en ce qu'**il contient
du potassium en une quantité moyenne inférieure à 48 ou supérieure à 68 mg/100 ml,
du magnésium en une quantité moyenne inférieure à 4,6 ou supérieure à 10,6 mg/100 ml,
du sodium en une quantité moyenne inférieure à 9 ou supérieure à 19 mg/100 ml,
des chlorures en une quantité moyenne inférieure à 26 ou supérieure à 38 mg/100 ml ,
du lactose en une quantité moyenne inférieure à 5,3 ou supérieure à 6,9 g/100 ml,
des maltodextrines en des quantités moyennes supérieures à 10 mg/100 ml,
des oligosaccharides en une quantité moyenne inférieure à 50 ou supérieure à 150 mg/100ml,
de l'acide N-acétyl-neuraminique en une quantité moyenne inférieure à 5,1 ou supérieure à 6,1 mg/100 ml,
de la leucine en une quantité moyenne inférieure à 160 ou supérieure à 200mg/100 ml,
de la méthionine en une quantité moyenne inférieure à 23 ou supérieure à 63 mg/100 ml,
de la thréonine en une quantité moyenne inférieure à 60 ou supérieure à 95 mg/100 ml,
du tryptophane en une quantité moyenne inférieure à 10 ou supérieure à 30 mg/100 ml,
de la valine en une quantité moyenne inférieure à 80 ou supérieure à 140 mg/100 ml,
de l'acide aspartique en une quantité moyenne inférieure à 168 ou supérieure à 188 mg/100 ml,
de la cystine en une quantité moyenne inférieure à 18 ou supérieure à 28 mg/100 ml,
de la glycine en une quantité moyenne inférieure à 30 ou supérieure à 40 mg/100 ml,
de la proline en une quantité moyenne inférieure à 150 ou supérieure à 160 mg/100 ml,
de la lysine en une quantité moyenne inférieure à 131 ou supérieure à 191 mg/100 ml,
de la taurine en une quantité moyenne inférieure à 0,9 ou supérieure à 2,9 mg/100 ml,
de l'acide caprique en une quantité moyenne inférieure à 31 ou supérieure à 81 mg/100 ml,
de l'acide laurique en une quantité moyenne inférieure à 34 ou supérieure à 114 mg/100 ml,
de l'acide myristique en une quantité moyenne inférieure à 58 ou supérieure à 98 mg/100 ml,
de l'acide palmitique en une quantité moyenne inférieure à 208 ou supérieure à 308 mg/100 ml,
de l'acide stéarique en une quantité moyenne inférieure à 8 ou supérieure à 22 mg/100 ml,
de l'acide myristoléique en une quantité moyenne inférieure à 6 ou supérieure à 27 mg/100 ml,
de l'acide palmitoléique en une quantité moyenne inférieure à 70 ou supérieure à 160 mg/100 ml,
de l'acide oléique en une quantité moyenne inférieure à 199 ou supérieure à 329 mg/100 ml,
de l'acide linoléique en une quantité moyenne inférieure à 73 ou supérieure à 213 mg/100 ml,
de l'acide linolénique en une quantité moyenne inférieure à 77 ou supérieure à 287 mg/100 ml,
de l'acide gamma-linolénique en une quantité moyenne supérieure à 1 mg/100 ml,
de l'acide arachidonique en une quantité moyenne supérieure à 8 mg/100 ml,
de la carnitine totale en une quantité moyenne supérieure à 1 mg/100 ml,
de la lécithine en une quantité moyenne inférieure à 5 ou supérieure à 29 mg/100 ml,
de la vitamine B1 en une quantité moyenne inférieure à 22 ou supérieure à 36 µg/100 ml,
de la vitamine B2 en une quantité moyenne inférieure à 21 ou supérieure à 45 µg/100 ml,
de la vitamine B3 en une quantité moyenne inférieure à 45 ou supérieure à 125 µg/100 ml,
de la vitamine B6 en une quantité moyenne inférieure à 15 ou supérieure à 30 µg/100 ml,
de la vitamine B12 en une quantité moyenne inférieure à 250 ou supérieure à 290 ng/100 ml,
de la vitamine C en une quantité moyenne inférieure à 3 ou supérieure à 11 mg/100 ml,
de l'acide folique en une quantité moyenne inférieure à 2 ou supérieure à 8 µg/100 ml,
de l'acide pantothénique en une quantité moyenne inférieure à 170 ou supérieure à 290 µg/100 ml,
de la biotine en une quantité moyenne inférieure à 1,2 ou supérieure à 1,6 µg/100 ml,
de la choline en une quantité moyenne inférieure à 1 ou supérieure à 10 mg/100 ml,
du sulfate de vitamine D en une quantité moyenne inférieure à 0,32 ou supérieure à 0,72 µg/100 ml,
de l'inositol en une quantité moyenne inférieure à 10 ou supérieure à 30 mg/100 ml,
de la vitamine A en une quantité moyenne inférieure à 25 ou supérieure à 75 µg/100 ml,
des caroténoïdes en une quantité moyenne inférieure à 21 ou supérieure à 39 µg/100 ml,
de la vitamine D en une quantité moyenne inférieure à 0,2 ou supérieure à 1,0 µg/100 ml,
de la vitamine E en une quantité moyenne inférieure à 0,05 ou supérieure à 0,09 mg/100 ml,
de la vitamine K en une quantité moyenne inférieure à 0,7 ou supérieure à 1,3 µg/100 ml,
du fer en une quantité moyenne inférieure à 40 ou supérieure à 100 µg/100 ml,
du cuivre en une quantité moyenne inférieure à 25 ou supérieure à 45 µg/100 ml,
du zinc en une quantité moyenne inférieure à 130 ou supérieure à 230 µg/100 ml,
du chrome en une quantité moyenne inférieure à 0,1 ou supérieure à 0,9 µg/100 ml,
du cobalt en une quantité moyenne inférieure à 8 ou supérieure à 12 µg/100 ml,
du manganèse en une quantité moyenne inférieure à 2,4 ou supérieure à 4,4 µg/100 ml,
du molybdène en une quantité moyenne inférieure à 0,2 ou supérieure à 0,8 µg/100 ml,
du sélénium en une quantité moyenne inférieure à 0,2 ou supérieure à 0,8 µg/100 ml,
de l'iode en une quantité moyenne inférieure à 1 ou supérieure à 3 µg/100 ml,
du brome en une quantité moyenne inférieure à 10 ou supérieure à 170 µg/100 ml,
du fluor en une quantité moyenne inférieure à 5 ou supérieure à 15 µg/100 ml,
du monophosphate de cytidine en une quantité moyenne inférieure à 950 ou supérieure à 1050 µg/100 ml,
du monophosphate d'inosine en une quantité moyenne inférieure à 5 ou supérieure à 15 µg/100 ml,
de la cytidine en une quantité moyenne inférieure à 100 ou supérieure à 140 µg/100 ml,
de l'inosine en une quantité moyenne inférieure à 11 ou supérieure à 13 µg/100 ml, et/ou
de l'acétylcholine en une quantité moyenne inférieure à 90 ou supérieure à 110 µg/100 ml.

3. Aliment diététique selon la revendication 1 ou 2, **caractérisé en ce qu'**une ou plusieurs des substances se trouvant naturellement dans le lait d'équidés présentent des teneurs différentes de leurs valeurs moyennes naturelles dans le lait d'équidés.

4. Aliments diététiques selon l'une des revendications 2 ou 3, **caractérisés en ce que** les teneurs sont diminuées ou augmentées proportionnellement à la quantité d'eau ajoutée ou éliminée.

5. Procédé de préparation d'aliments diététiques selon l'une des revendications 1 à 4, **caractérisé en ce que**
a) on combine du lait, des constituants du lait et/ou des produits laitiers d'équidés, avec
aa) des substances convenant à l'alimentation humaine, sous forme isolée et/ou dans les proportions des matières dans les produits alimentaires, choisies parmi les classes de substances suivantes, et leurs sous-groupes : les protéines et leurs constituants et dérivés, les matières grasses et leurs constituants et dérivés, les hydrates de carbone et leurs constituants et dérivés, les substances minérales et leurs constituants et dérivés, les vitamines et leurs constituants et dérivés, les substances ayant un effet analogue à celui des vitamines et leurs constituants et dérivés, en particulier les substances végétales secondaires, les enzymes et leurs dérivés, les acides nucléiques et leur dérivés, les hormones et les substances ayant un effet analogue à celui des hormones et leurs dérivés, en particulier l'acétylcholine,
bb) des substances convenant au traitement thérapeutique de l'homme,
cc) du lait, des constituants du lait et/ou des produits laitiers d'équidés et/ou de mammifères autres que les équidés, et/ou
b) on adapte le lait d'équidés par des mesures appropriées aux exigence des aliments diététiques, choisies parmi l'élevage des animaux, l'entretien des animaux, l'alimentation des animaux, les techniques d'obtention du lait, le traitement du lait.

6. Procédé selon la revendication 5, **caractérisé en ce qu'**on procède à la combinaison avec les substances selon la revendication 5 a), aa), en partie ou en totalité avec des préparations provenant d'aliments naturels convenant à l'alimentation humaine.

7. Procédé selon la revendication 5 ou 6, **caractérisé en ce qu'**on procède à la combinaison avec des substances
par incorporation physico-chimique des substances dans le lait, les constituants du lait et/ou les produits laitiers, en particulier par délayage à l'aide d'agitateurs présentant un mouvement d'agitation en forme de lemniscate,
par agitation des substances à ajouter avec une partie du lait, des constituants du lait et des produits laitiers,
par dispersion mécanique des substances à ajouter dans le lait, les constituants du lait et/ou les produits laitiers, et/ou
par exposition appropriée d'intermédiaires à des sources lumineuses.

8. Procédé selon l'une des revendications 5 à 7, **caractérisé en ce qu'**on fournit directement des substances aux équidés donneurs de lait, en particulier en leur donnant pour alimentation des préparations à base d'oeufs de poule.

9. Procédé selon l'une des revendications 5 à 8, **caractérisé en ce qu'**on procède en totalité ou en partie par des mesures appropriées au niveau de l'élevage, à une adaptation des facteurs immunitaires que l'on trouve dans le lait d'équidés, en particulier par introduction de microorganismes dans l'environnement des équidés donneurs de lait, et/ou par inoculation de substances appropriées aux équidés donneurs de lait.

10. Procédé selon l'une des revendications 5 à 9, **caractérisé en ce qu'**aucun procédé n'est utilisé pour réduire la teneur en germes ayant une influence négative sur les constituants du produit.

11. Procédé selon l'une des revendications 5 à 10, **caractérisé en ce que**, pendant l'opération d'adaptation, on ajuste la température à des valeurs inférieures à 63°C et en particulier à 42°C.

12. Procédé selon l'une des revendications 5 à 11, **caractérisé en ce qu'**on modifie la concentration du lait d'équidés utilisé, par addition ou enlèvement d'eau.
